# EUROPÄISCHE PATENTSCHRIFT

(11) **EP 3 280 939 B1**
(45) Veröffentlichungstag und Bekanntmachung des Hinweises auf die Patenterteilung: **13.05.2020**
(21) Anmeldenummer: 16719030.5
(22) Anmeldetag: 08.04.2016
(51) Int. Cl.: F16K 31/08, B67C 3/28, B67C 11/04

(54) **DURCHFLUSSREGELVORRICHTUNG**
FLOW CONTROL DEVICE
DISPOSITIF DE RÉGULATION DE DÉBIT

(30) Priorität: 10.04.2015 DE 102015004691
(43) Veröffentlichungstag der Anmeldung: 14.02.2018
(73) Patentinhaber: Bürkle GmbH, 79415 Bad Bellingen (DE)
(72) Erfinder: HÜBNER, Peter, 79539 Lörrach (DE)
(74) Vertreter: Fischer & Konnerth
(86) Internationale Anmeldenummer: PCT/EP2016/057822
(87) Internationale Veröffentlichungsnummer: WO 2016/162516

(56) Entgegenhaltungen:
- EP-B1- 1 281 016
- JP-A- S5 620 883
- JP-A- S6 131 780
- JP-A- 2005 164 025
- US-A- 3 109 504

## Beschreibung

Die vorliegende Erfindung betrifft eine Durchflussregelvorrichtung.

Bei der Manipulation von Flüssigkeiten beispielsweise in Prüflaboren sowie bei Probenahmen zum Zwecke der Qualitätskontrolle und ähnlichen Anwendungen sind Materialverluste durch Überlaufen bzw. Überdosieren nicht immer vermeidbar. Auch bei Ab- und Umfüllvorgängen kommt es zum Verschütten von Flüssigkeiten, mit je nach Qualität der Flüssigkeiten mehr oder weniger problematischem Reinigungsaufwand. Übliches Hilfsmittel beim Umfüllen sind hier in der Regel Trichtereinrichtungen. Solche gibt es als einfache Trichter, wie sie aus dem Haushalt bekannt sind, sowie z. B. als sog. Flaschenaufsatz-Dispenser. (z. B. Firma Bürkle, Bad Bellingen). Handelsübliche sog. Allzwecktrichter haben in der Regel einen ungehinderten Auslauf, d.h. eine im Trichterbehälter befindliche Flüssigkeit kann nicht gezielt abgesperrt werden. Sie läuft ab, bis der Trichter leer ist. Um das zu verhindern muss bei Abfüllvorgängen eine Bedienungsperson das zu befüllende Behältnis halten, während sie oder eine Hilfsperson gleichzeitig den Ablasshahn des abgebenden Behälters bedienen muss. Dabei besteht die Gefahr von Flüssigkeitsverlust durch Verschütten.

Festgelegte Arbeitsabläufe im Rahmen von Qualitätssicherung und Prüflabor umfassen auch manuelle Tätigkeiten in Form einfacher Abfüllvorgänge, welche besondere Geschicklichkeit erfordern. Zu beachten ist auch der Sicherheitsaspekt beim Umfüllen von "kritischen" also gefährlichen Flüssigkeiten, wie z. B. Laugen oder Säuren. Herkömmliche Trichter besitzen keine Sperrfunktion für das Verbleiben bzw. Dosieren der Flüssigkeit im Trichter, für den Moment, in dem der Umfüllvorgang angehalten werden soll.

Die JP S61 31780 A beschreibt ein Ventilgehäuse mit einer von einer Flüssigkeit in einem Ventilsitz gehaltenen Schließkugel, zum Öffnen des Ventils welche durch einen außerhalb angeordneten Permanentmagneten bewegt werden kann.

Aus der JP 2005 164025 A ist ein Flüssigkeitsregelventil bekannt, bei welchem eine Schließkugel mit Magnetkraft gesteuert wird.

Die JP S56 320883 A lehrt eine Elektromagnetventilanordnung mit einer Schließkugel, wobei die Anordnung mittels der von einem Dauermagneten geführten Schließkugel durch eine mechanische Feder geschlossen wird, sobald der Elektromagnet stromlos sind.

Der vorliegenden Erfindung liegt eine Aufgabe zugrunde, eine Durchflussregelvorrichtung vorzuschlagen, mit welcher die aus dem Stand der Technik bekannten Nachteile vermieden oder zumindest stark verringert werden.

Die Aufgabe wird gelöst mit einer Durchflussregelvorrichtung gemäß Anspruch 1.

Mit der erfindungsgemäßen Durchflussregelvorrichtung ist es vorteilhafterweise möglich, aufgrund der magnetisch gesteuerten Sperrvorrichtung das Überlaufen bzw. Überdosieren von Flüssigkeiten zu vermeiden. Die neue Vorrichtung unterstützt die Abfüllvorgänge und hilft, Materialverlust zu vermieden, ohne Arbeitsabläufe zu verändern. Sie ist unabhängig vom Standort einsetzbar, z.B. an tragbaren Behältern und Einrichtungen. Die erfindungsgemäße magnetisch gesteuerte Sperrvorrichtung arbeitet völlig stromlos und erfordert deshalb keinen Strom- oder Akkuanschluss, was für einen ambulanten Einsatz von Vorteil ist. Mit der erfindungsgemäßen Durchflussregelvorrichtung können Kanister und Vorratsflaschen mit Ablasshahn ausgerüstet werden. Es sind auch Einhandbedienungen denkbar. Der Anbau der erfindungsgemäßen Durchflussregelvorrichtung z. B. am Auslauf eines Raumsparkanisters oder einer Pumpe erleichtert die Handhabung dieser Geräte. Hierbei befindet sich der dritte Ringmagnet axial im Wesentlichen im Bereich des ersten Längenabschnitts des Durchflusskanals. Diese Konstruktion hat den Vorteil, dass der dritte Ringmagnet in einem festen Abstand derart beabstandet zum Konussitz angeordnet werden kann, in welchem er den ersten Ringmagneten in einer Position zum Konussitz hält, in welchem die Verschließkugel sich in Verschlussposition befindet. Wird bei diesem Ausführungsbeispiel der erste Ringmagnet in Richtung des dritten Längenabschnitts bewegt, wird die in einer (im Folgenden näher erläuterten) Position II befindliche Verschließkugel die Mittelachse - da nicht mehr durch den Konussitz zentriert und axial fixiert - axial und radial verlassen und den Durchflusskanal öffnen.

In einer Ausbildung ist die Vorspanneinrichtung der Durchflussregelvorrichtung als Axialdruckfeder ausgebildet. Die Axialdruckfeder kann eine Spiralfeder sein, welche sich einfach um den Durchflusskanal windet und in beigelegten Schlusswindungen endet und derart angeordnet sein, dass sie sich an der Vorrichtung abstützt. Wird der erste Ringmagnet gegen den Axialdruck der im Bereich des dritten Längenabschnitts an der Durchflussregelvorrichtung abgestützten Axialdruckfeder vom zweiten Längenabschnitt in Richtung zum dritten Längenabschnitt bewegt, dann bewegt sich die Kugel infolge des Zusammenwirkens der Magnetkräfte von Ring- und Kugelmagnet aus ihrer Position in der Mittelachse und läuft auf der Konusfläche axial und radial nach außen und öffnet dabei den zuvor verschlossenen ersten Längenabschnitt. Der Durchgang vom ersten zum dritten Längenabschnitt des Durchflusskanals ist geöffnet, die Flüssigkeit kann fließen, solange der erste Ringmagnet in dieser Position gehalten wird. Lässt man zu, dass sich der erste Ringmagnet wieder zurückbewegen kann, drängt ihn die Kraft der Axialdruckfeder wieder in seine Ausgangsposition zurück, wobei er die magnetische Verschließkugel wieder "mitnimmt" und hierdurch den Durchflusskanal abschließt. Die Verschließkugel sitzt dann wieder in dem Konussitz am Übergang vom ersten zum zweiten Längenabschnitt des Durchflusskanals.

Erfindungsgemäß ist die Vorspanneinrichtung der Durchflussregelvorrichtung als an der Mittelachse (M) zentral orientierter zum ersten Ringmagneten umgekehrt axial-polarisierter zweiter (Süd-Nord-) Ringmagnet (SNRM) ausgebildet. Der hierbei erreichte vorteilhafte Effekt wird dadurch realisiert, dass sich die beiden Ringmagneten voneinander abstoßen und wie eine (gespannte) Axialdruckfeder, wie eben beschrieben, wirken.

Bei den zuvor genannten und beschriebenen vorteilhaften Ausbildungen bzw. Varianten der Durchflussregelvorrichtung gemäß der Erfindung wird die Verschließkugel von dem ersten Ringmagneten sozusagen "mitgeschleppt". Die prinzipiell ausbalancierte Lage der Verschließkugel in der Mittelachse ist aufgrund Ihrer dabei vorliegenden "Lage im labilen Gleichgewicht" ohne zusätzliche Hilfsmittel nur theoretisch erreichbar. Als hier vorliegendes Hilfsmittel dient der die Verschließkugel zentrierende Konussitz am Übergang zwischen erstem und zweitem Längenabschnitt des Durchflusskanals. Erlauben die vom ersten Ringmagneten aus wirkenden Magnetkräfte auf die Verschließkugel und die Geometrie des konischen zweiten Längenabschnitts des Durchflusskanals ein radiales Entfernen der Verschließkugel von der Mittelachse, dann wird der Durchflusskanal geöffnet.

Es gibt für die in der Mittelachse radial gehaltene Verschließkugel - also bei durch Radialkräfte ausgeübten aber "gehemmten" radialen Auslenkungen - zu dem ersten Ringmagneten drei stabile axiale Positionen, nämlich eine erste ("Position I" genannt) in der Mittelebene des Ringmagneten und in beiden Axialrichtungen jeweils eine axial zur Mittelebene beabstandete zweite Position ("Position II" genannt), wobei sich der Abstand der Kugel von der Mittelebene des ersten Ringmagneten in der Position II durch das Verhältnis der magnetischen Flussdichten von Ringmagnet und magnetischer Verschließkugel ergibt.

In einer vorteilhaften Ausbildung der Erfindung ist die Durchflussregelvorrichtung derart gestaltet, dass der Durchflusskanal im konischen zweiten Längenabschnitt im Inneren als weicher Kugeldichtsitz für die magnetische Verschließkugel ausgebildet ist. Dies hat den Vorteil, dass ein zuverlässiger dichter Abschluss der Durchflussregelvorrichtung erreicht wird. Der Kugeldichtsitz kann gleichsam als ringförmige Dichtlippe aus einem entsprechend zweckmäßigen Material ausgebildet werden.

Die Erfindung umfasst auch einen Abfülltrichter, welcher durch eine erfindungsgemäße Durchflussregelvorrichtung nach einem der Ansprüche 1 bis 2 gekennzeichnet ist. Ein derartig ausgebildeter Abfülltrichter ermöglicht ein beliebig genaues und sauberes einfaches Ab- und Umfüllen von Flüssigkeiten, wobei eine Dosierung derselben spielend einfach durchgeführt werden kann.

In einer vorteilhaften Ausbildung des erfindungsgemäßen Abfülltrichters ist dieser mit einer den Trichterfüllgrad anzeigenden Skala versehen. Damit lässt sich sehr einfach ein maßgenaues Dosieren realisieren.

In einer weiteren vorteilhaften Ausbildung des erfindungsgemäßen Abfülltrichters weist dieser eine Zentriereinrichtung für Behälteranschlüsse auf. Mittels der Zentriereinrichtung erhält man eine Stabilisierung der für das Abfüllen zu koppelnden Komponenten Abfülltrichter und zu befüllendes Gefäß, was die Sicherheit beim Ab- oder Umfüllen erhöht.

Die Erfindung umfasst auch einen Ablaufhahn, welcher durch eine erfindungsgemäße Durchflussregelvorrichtung nach einem der Ansprüche 1 bis 2 gekennzeichnet ist. Der Vorteil dieser erfindungsgemäßen Ausbildung liegt auf der Hand. Der erfindungsgemäße Ablaufhahn benötigt keinerlei sich drehenden Teil, er weist lediglich ein axial verschiebbares Stellglied, nämlich den längsverschieblichen ersten Ringmagneten auf, welcher die Verschließkugel steuert.

In einer Ausbildung ist die Durchflussregelvorrichtung derart gestaltet, dass die Vorspanneinrichtung als wenigstens zwei um die Mittelachse herum gruppierte, zum ersten Ringmagneten umgekehrt axial-polarisierte, am Durchflusskanal abgestützte erste (Süd-Nord)-Stabmagnete ausgebildet ist. Diese Gestaltungsvariante erlaubt den Einsatz weiterer Magnetformen, was wiederum den Freiraum zur Ausgestaltung der Durchflussregelvorrichtung im dritten Längenabschnitt erweitert.

In einer anderen Ausbildung ist die Durchflussregelvorrichtung dadurch gekennzeichnet, dass im dritten Längenabschnitt eine von dem ersten Längenabschnitt wegzeigende erste Hälfte eines Bajonettverschlusses in Form eines Drehrings angeordnet ist und dass im Drehring um die Mittelachse herum vier gleichmäßig zueinander beabstandete, am Durchflusskanal abgestützte zweite Stabmagnete mit wechselnder Nord-Süd-Ausrichtung angeordnet sind, und dass der Drehring wenigstens einen von seiner Peripherie radial nach außen ragenden, Kulissenstift aufweist. Damit ist die Vorrichtung derart gestaltet, dass sie mit einem Anschluss z. B. zur Verlängerung des Durchflusskanals mittels eines Schlauches oder Rohres oder einer anderen Verbindung gekoppelt werden kann. Besonders von Vorteil ist die Tatsache, dass insbesondere im Laborbetrieb Vorrichtungen mit glatten Oberflächen - wie dies bei der Vorrichtung der Fall ist - leichter zu reinigen sind als zum Beispiel Gewindegänge einer Schraubverbindung.

In wieder einer anderen Ausbildung ist die Durchflussregelvorrichtung dadurch gekennzeichnet, dass der ersten Hälfte eine mit dieser lösbar verbindbare zweite Hälfte eines Bajonettverschlusses in Form einer Hülse mit wenigstens einer in ihrer Wand integrierten Kulissenbahn zugeordnet ist, wobei die Hülse um ihre Mittelachse herum vier gleichmäßig zueinander beabstandete dritte Stabmagnete mit wechselnder Nord-Süd-Ausrichtung aufweist, wobei der Drehring derart dimensioniert ist, dass er in den Innenraum der Hülse der zweiten Hälfte passt, wobei die Kulissenbahn in der Wand in einem Kreisbogen von 45° peripher verläuft und mit wenigstens einem vom Ende der Hülse sich zur Kulissenbahn in der Wand axial erstreckenden und in diese übergehenden Kulissenkanal verbunden ist, wobei die Stellung der zweiten und dritten Stabmagnete bei axialer Flucht des wenigstens einen Kulissenkanals und des wenigstens einen Kulissenstifts um 45° zueinander verdreht positioniert ist. Mit dieser Ausgestaltung lässt ist nun ein vollständiger Bajonettverschluss zwischen der im dritten Längenabschnitt vorhandenen ersten Hälfte eines Magnetverschlusses mit der zweiten Hälfte, einer Hülse, die wiederum an ihrer der ersten Hälfte abgewandten Seite einen konventionellen Anschluss für einen Schlauch oder ein Rohr oder dergl. aufweisen kann, realisieren. Zum Einsatz wird der Drehring derart zu der Hülse geführt, dass der Kulissenstift zunächst gegen die von den Magneten wirkenden Umfangskräfte um die Mittelachse in den Kulissenkanal gelangen kann. Die axialen Magnetkräfte ziehen dann den Drehring in die Hülse hinein, sodass der Kulissenstift in den Bereich der Kulissenbahn gerät und unter dem Einfluss der peripher und axial wirkenden Magnetkräfte in die Kulissenbahn bewegt wird. Die axialen Kräfte ziehen den Drehring zur Durchflussregelvorrichtung hin.

In einer weiteren Ausbildung ist die Durchflussregelvorrichtung dadurch gekennzeichnet, dass die Vorspanneinrichtung als vier um die Mittelachse herum gruppierte, zum ersten Ringmagneten umgekehrt axial-polarisierte, am Durchflusskanal abgestützte erste (Süd-Nord) Stabmagnete ausgebildet ist. Damit wird die zuvor mit zwei ersten (Süd-Nord) Stabmagneten erläuterte Lösung wesentlich verbessert, da sich aufgrund der vier Stabmagnete eine besser ausbalancierte Zuordnung der einzelnen Komponenten erreichen lässt.

In noch einer weiteren Ausbildung ist die Durchflussregelvorrichtung dadurch gekennzeichnet, dass sie anstatt einer(s) jeweils zwei in ihrer Wand integrierte Kulissenbahnen und Kulissenkanäle aufweist, die sich jeweils bezüglich der Mittelachse gegenüberliegen. Auch mit dieser Lösung lassen sich die Gleichmäßigkeit der Kraftverteilung und der störungsfreie Betrieb der Vorrichtung stark verbessern und ausbalancieren.

Schließlich ist in noch einer weiteren Ausbildung die Durchflussregelvorrichtung dadurch gekennzeichnet, dass die erste Hälfte und die mit dieser lösbar verbindbare zweite Hälfte des Bajonettverschlusses Einrichtungen zur gegenseitigen Zentrierung und zur Abdichtung des Durchflusskanals aufweisen. Hierdurch werden die Betriebssicherheit erhöht und die Handhabung vereinfacht. Dabei können eine O-Ringdichtung oder auch ein Dichtlippe aus zweckmäßigem Material eingesetzt werden.

Weitere vorteilhafte Ausbildungen der Erfindung ergeben sich aus der folgenden Beschreibung. Hierbei wird die Erfindung zum leichteren Verständnis anhand von Ausführungsbeispielen unter Zuhilfenahme einer Zeichnung kurz beschrieben.
- Fig. 1: zeigt stark schematisiert ein erstes Ausführungsbeispiel der erfindungsgemäßen Durchflussregelvorrichtung mit geschlossenem Durchflusskanal als Schnittansicht.
- Fig. 2: zeigt stark schematisiert das erste Ausführungsbeispiel nach Fig. 1 mit geöffnetem Durchflusskanal als Schnittansicht.
- Fig. 3: zeigt stark schematisiert ein zweites Ausführungsbeispiel der erfindungsgemäßen Durchflussregelvorrichtung mit geschlossenem Durchflusskanal als Schnittansicht.
- Fig. 4: zeigt stark schematisiert das zweite Ausführungsbeispiel nach Fig. 3 mit geöffnetem Durchflusskanal als Schnittansicht.
- Fig. 5: zeigt stark schematisiert die theoretisch möglichen Positionen von Ringmagnet und Verschließkugel/Kugelmagnet zueinander in möglichen quasistabilen Positionen in Schnitt- und Draufsicht.
- Fig.6: zeigt ein Diagramm zur Darstellung der magnetischen Flussdichte B [T] und Ihre Auswirkung auf die Positionen I und II.
- Fig. 7: zeigt stark schematisiert eine Detailansicht einer an einem Raumsparkanister angeordneten Durchflussregelvorrichtung.
- Fig. 8: zeigt stark schematisiert eine Detailansicht einer an einer Pumpe angeordneten Durchflussregelvorrichtung.
- Fig. 9: zeigt stark schematisiert ein weiteres Ausführungsbeispiel der erfindungsgemäßen, an einem Trichter angeordneten Durchflussregelvorrichtung mit geschlossenem Durchflusskanal (Position I) als Schnittansicht.
- Fig. 10: zeigt stark schematisiert das Ausführungsbeispiel nach Fig. 9 mit geöffnetem Durchflusskanal (Position II) als Schnittansicht.
- Fig. 11: zeigt stark schematisiert ein weiteres der Darstellung in Fig. 1 ähnliches Ausführungsbeispiel der Durchflussregelvorrichtung - hier jedoch gegenüber Fig. 1 "auf dem Kopf stehend" und mit Stabmagneten - in der Stellung mit durch die Kugel geschlossenem Durchflusskanal als Schnitt E - E gemäß Fig. 13.
- Fig. 12: zeigt stark schematisiert die Darstellung von in Fig. 11 als Schnitt F - F gemäß Fig. 13.
- Fig. 13: zeigt eine Draufsicht auf die Darstellungen nach Fig. 11 und 12 sowie die Lage der Schnittlinien E - E und F - F der Fig. 11 und 12.
- Fig. 14a: zeigt eine Draufsicht auf eine in Form einer Hülse ausgebildete zweite Hälfte eines Bajonettverschlusses mit vier dritten Stabmagneten welche mit wechselnder Nord-Süd-Ausrichtung angeordnet sind, sowie in Position S angeordnete Kulissenkanäle in der Stellung beim Aufsetzen eines Drehrings auf die Hülse.
- Fig. 14b: zeigt eine Draufsicht auf eine in Form des Drehrings ausgebildete erste Hälfte eines Bajonettverschlusses mit vier dritten Stabmagneten welche mit wechselnder Nord-Süd-Ausrichtung angeordnet sind, sowie zwischen N und S angeordnete Kulissenstifte beim Aufsetzen des Drehrings auf die Hülse.
- Fig. 15a: entspricht der Darstellung von Fig. 14a in der Stellung beim Aufsetzen des Drehrings auf die Hülse.
- Fig. 15b: entspricht der Darstellung von Fig. 15a, jedoch in verriegelter Stellung nach dem Aufsetzen des Drehrings auf die Hülse.
- Fig. 16a: und Fig. 16b zeigen jeweils eine auseinandergezogene isometrische Darstellung der Drehsituationen der in Fig. 14a und 14b gezeigten Elemente beim Aufsetzen des Drehrings auf die Hülse.
- Fig. 17a: und Fig. 17b zeigen jeweils eine auseinandergezogene isometrische Darstellung der Drehsituationen der in Fig. 15a und 15b gezeigten Elemente in verriegelter Stellung nach dem Aufsetzen des Drehrings auf die Hülse.
- Fig. 18: zeigt ein Beispiel einer Durchflussregelvorrichtung ausgeführt als Teil einer Bajonettkupplung vor der Koppelung in perspektivischer Darstellung gesehen von links oben.
- Fig. 19: zeigt ein Beispiel einer Durchflussregelvorrichtung ausgeführt als Teil einer Bajonettkupplung vor der Koppelung in perspektivischer Darstellung gesehen von rechts oben.

Anmerkung: Für die gesamte hier vorliegende Beschreibung gilt, wenn bei der Erwähnung von Magnetpolarisierungen von zueinander kombinierten Magneten z. B. eine Nord-Süd-Polarisierung mit einer Süd-Nord-Polarisierung (Abstoßung) gekoppelt wird, äquivalent auch die Kombination einer Süd-Nord-Polarisierung mit einer Nord-Süd-Polarisierung (Abstoßung). Dies gilt ferner analog auch für den Fall der Kombination einer Süd-Nord-Polarisierung mit einer Süd-Nord-Polarisierung (Anziehung) und vice versa.

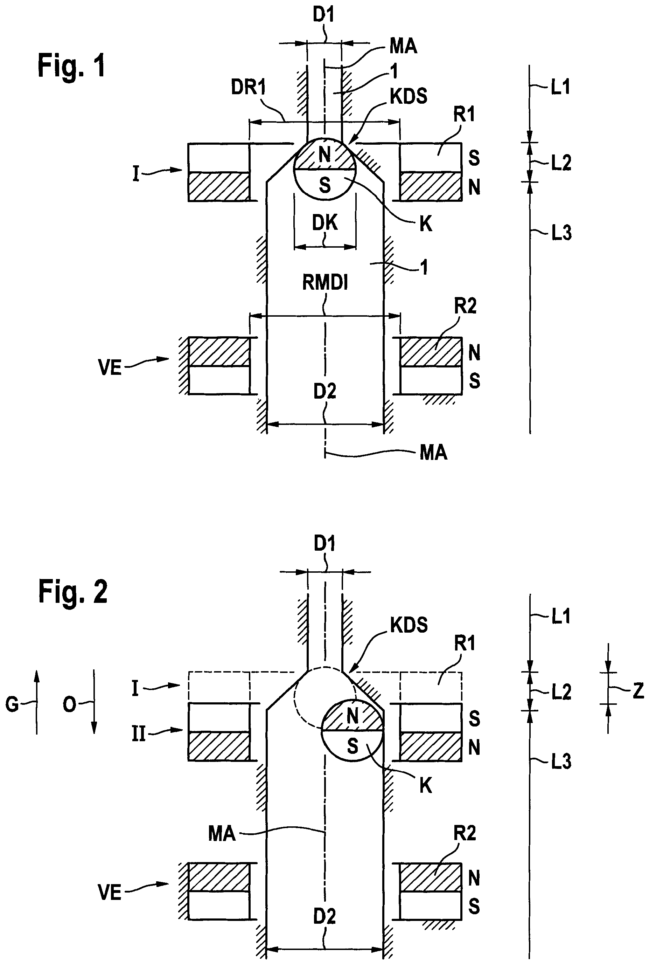

Die in Fig. 1 schematisch skizzierte Durchflussregelvorrichtung hat einen Durchflusskanal 1 aus nicht-magnetischem Material mit einer Mittelachse MA. Der Durchflusskanal 1 ist gegliedert in drei Längenabschnitte L1, L2 und L3. Der erste Längenabschnitt hat einen ersten Durchmesser D1. Der zweite Längenabschnitt verläuft sich konisch erweiternd zum dritten Längenabschnitt L3, wobei sich der Durchflusskanal 1 im zweiten Längenabschnitt L2 konisch von dem ersten Durchmesser D1 auf einen zweiten Durchmesser D2 erweitert. Eine im zweiten und dritten Längenabschnitt L2, L3 beweglich angeordnete magnetische Verschließkugel K hat einen Kugeldurchmesser DK, der zwischen dem ersten und dem zweiten Durchmesser D1, D2 liegt. Auf Höhe der magnetischen Verschließkugel K ist ein in der Mittelachse MA zentral orientierter, entlang dieser längsverschieblich angeordneter erster, axial-polarisierter (Nord-Süd) Ringmagnet R1, mit einem Innendurchmesser DR1, welcher größer ist als der Außendurchmesser des Durchflusskanals 1 im dritten Längenabschnitt L3 gezeigt. Eine den Nord-Süd (N-S) polarisierten ersten Ringmagneten R1 axial in Richtung zum ersten Längenabschnitt L1 drängende Vorspanneinrichtung VE ist in Form eines Süd-Nord-polarisierten zweien Ringmagneten R2 gezeigt, welcher den ersten Ringmagneten magnetisch abstößt. Diese Funktion könnte ebenso von einer hier nicht gezeigten Axialdruckfeder übernommen werden. Der Durchflusskanal 1 und der zweite Ringmagnet R2 sind teilweise mit Kurzschraffuren / / / / / versehen, um anzudeuten, dass beide zueinander ortsfest angeordnet sind. Der erste Ringmagnet R1 zieht die Verschließkugel K magnetisch in die gezeigte Position I, in welcher diese den Durchflusskanal 1 in einem Kugeldichtsitz KDS dicht abschließt.

Wird nun der erste Ringmagnet R1 gegen die ihn abstoßende Magnetkraft des zweiten Ringmagneten R2 in Richtung des Pfeils O ("offen") in die Position II (Fig. 2) bewegt, dann nimmt er die Verschließkugel K mit und der Durchflusskanal 1 ist geöffnet. Bei der eben beschriebenen Verschiebung des Ringmagneten R1 von Position I in Position II löst er die Verschließkugel K aus dem Kugeldichtsitz KDS. Die Verschließkugel K kann, da sie nun nicht mehr von der zentrierenden Geometrie des Kugeldichtsitzes KDS und der Kraft des nun nicht mehr sich in Position I befindlichen ersten Ringmagneten R1 gehalten wird, im zweiten Längenabschnitt L2 des Durchflusskanals 1 radial nach außen wandern. In Fig. 2 ist die Verschiebung des ersten Ringmagneten R1 um die Strecke Z in Richtung des Pfeils G von der gestrichelt angedeuteten Position I in die mit durchgezogener Linie gezeichnete Position II dargestellt. Dasselbe gilt für die Verschließkugel K. Die Polarisierung der Magnete ist jeweils mit dem schraffiert gezeichneten Teil "N" (also Nord) und dem nicht schraffiert gezeichneten Teil "S" (also Süd) angedeutet. Diese Bedeutung gilt für die gesamte vorliegende Beschreibung. Eine Zurückbewegung des ersten Ringmagneten R1 in die Position I hat zur Folge, dass der Durchflusskanal 1 wieder verschlossen wird, da die Verschließkugel K hierbei ebenfalls wieder ihre Position I einnimmt.

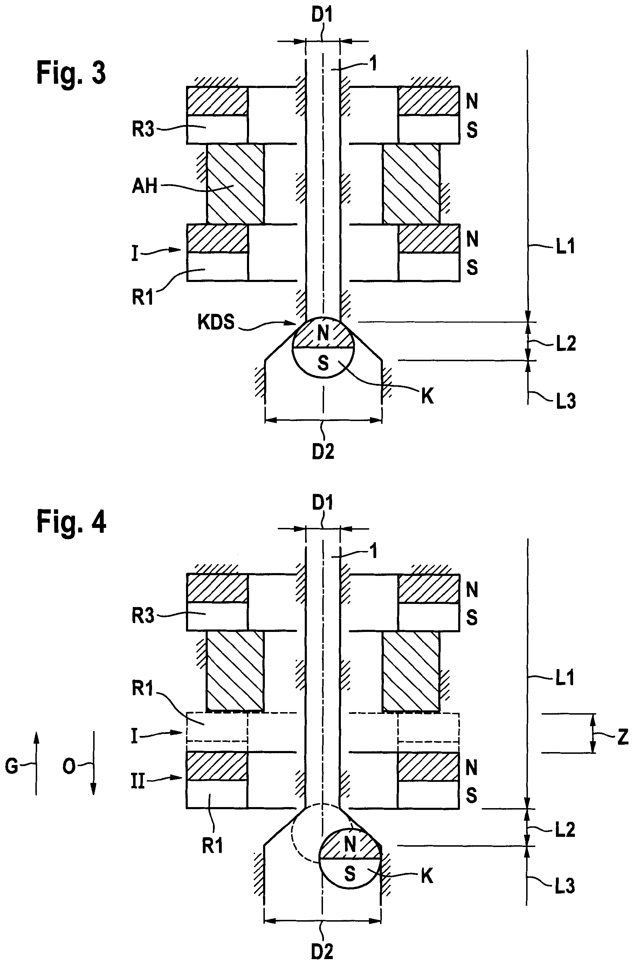

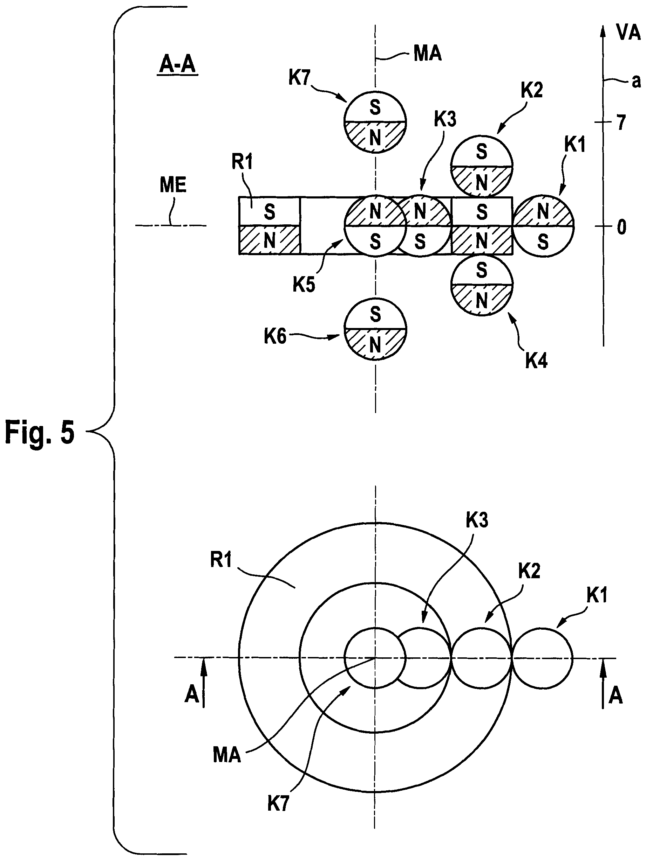

In den Fig. 3 und 4 ist eine Ausbildung einer erfindungsgemäßen Durchflussregelvorrichtung gezeigt. Die Einzelheiten zum Durchflusskanal 1 und zu dem ersten Ringmagneten R1 stimmen mit denen der in den Fig. 1 und 2 beschriebenen Ausbildung überein. Deshalb werden sie nicht noch einmal beschrieben. Lediglich die axiale Anordnung und die Polarisierung des ersten Ringmagneten R1 unterscheiden sich von der ersten Variante gemäß den Fig. 1 und 2. Wie bei der Beschreibung zur Fig. 5 noch näher erläutert werden wird, existiert für eine wie in Fig. 3 gezeigte Konstellation von Ringmagnet R1 zu Verschließkugel K quasistabile Situation zwischen Ringmagnet und magnetischer Kugel. Allerdings ordnen sich Ringmagnet und magnetische Kugel hier (axial gesehen) in derselben Polarisierung NS-NS an (im Gegensatz zur Ausbildung gemäß Fig. 1 und 2). Ein dritter - gleich wie der erste Ringmagnet R1 polarisierter und diesen anziehender - Ringmagnet R3 ist beabstandet mittels eines Abstandshalters AH wie gezeigt angeordnet.

Wird nun der erste Ringmagnet R1 gegen die ihn anziehende Magnetkraft des dritten Ringmagneten R3 in Richtung des Pfeils O ("offen") in die Position II (Fig. 4) bewegt, dann nimmt er die Verschließkugel K mit und der Durchflusskanal 1 ist geöffnet. Bei der eben beschriebenen Verschiebung des Ringmagneten R1 von Position I in Position II löst er die Verschließkugel K aus dem Kugeldichtsitz KDS. Die Verschließkugel K kann, da sie nun nicht mehr von der zentrierenden Geometrie des Kugeldichtsitzes KDS und der Kraft des nun nicht mehr sich in Position I befindlichen ersten Ringmagneten R1 gehalten wird, im zweiten Längenabschnitt L2 des Durchflusskanals 1 radial nach außen wandern. In Fig. 4 ist die Verschiebung des ersten Ringmagneten R1 um die Strecke Z in Richtung des Pfeils G von der gestrichelt angedeuteten Position I in die mit durchgezogener Linie gezeichnete Position II dargestellt. Dasselbe gilt für die Verschließkugel K. Eine Zurückbewegung des ersten Ringmagneten R1 in die Position I hat zur Folge, dass der Durchflusskanal 1 wieder verschlossen wird, da die Verschließkugel K hierbei ebenfalls wieder ihre Position I einnimmt.

Für die erfindungsgemäße Durchflussregelvorrichtung werden vorzugsweise Neodym-Magneten verwendet, es können jedoch andere geeignet starke Magneten zum Einsatz kommen. In Fig. 5 sind die möglichen für die in den Fig. 1 bis 4 gezeigten Konstellationen von Ringmagnet R1 zu Verschließkugel K quasistabilen Situationen zwischen Ringmagnet und magnetischer Kugel dargestellt. Um die Polarisierung der Magnete anzudeuten ist immer die N-Komponente der N-S-Polarisierung dunkel schraffiert gezeichnet. Die hier gezeigten sieben Kugelpositionen gelten für die gleiche Kugel. Zu unterscheiden sind die beiden Ausführungsbeispiele AB12 (Fig. 1 und 2, sowie Fig. 9 und 10) und AB34 (Fig. 3 und 4).

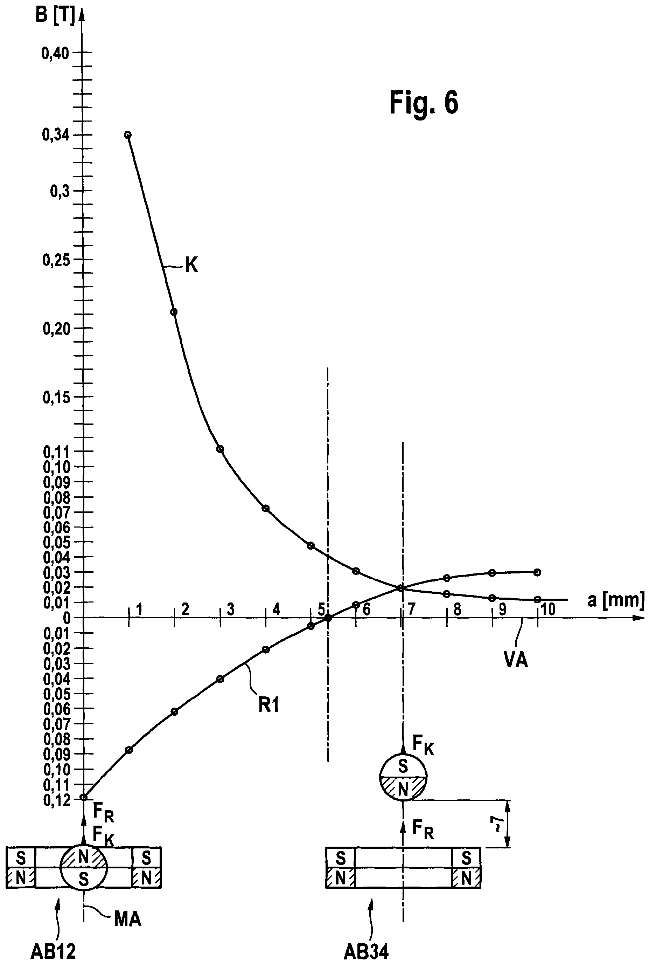

Lässt man die Magnetkugel sich frei zu dem Ringmagneten R1 bewegen, dann nimmt sie eine der stabilen Positionen K1 bis K4 ein wie in Fig. 5 gezeigt. Hierbei ist ihre Polarisierung N-S oder S-N konstant. Zwingt man die Magnetkugel auf eine mit der Mittelachse MA zusammenfallende Bahn, so wird sie eine von den drei gezeigten Positionen K5, K6 oder K7 einnehmen. In Position K5 behält sie die Polarisierung wie in den Positionen K1 bis K4, wogegen sie in den Positionen K6 und K7 ihre Polarisierung wie gezeigt umkehrt. Die Positionen K6 und K7 sind - angenommen die radiale Kraftkomponente wird jeweils künstlich annulliert - axial stabile Positionen. Dies soll anhand des in Fig. 6 gezeigten Diagramms der magnetischen Flussdichte B [T] gegenüber dem vertikalen Abstand a [mm] der Kugel von der Mittelebene ME des Ringmagneten R1 verdeutlicht werden. In den Positionen K6 und K7 (a ≈ 7 mm) sind die magnetischen Flussdichten B von Ringmagnet zu Kugelmagnet im Gleichgewicht. Die Vertikalachse VA gibt den Abstand der Magnetkugel von der Mittelebene ME des Ringmagneten R1 an.

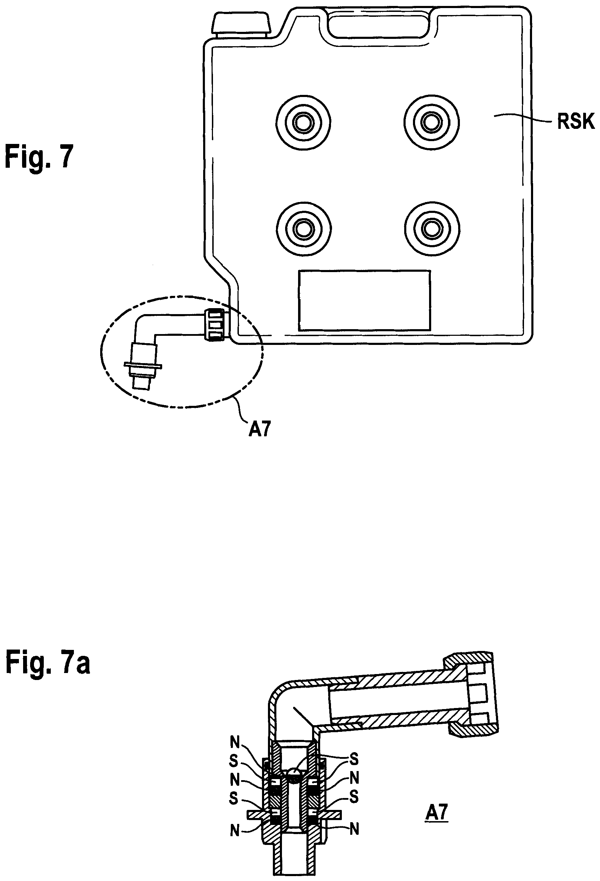

Fig. 7 zeigt einen Raumsparkanister RSK, an dessen Unterkante eine erfindungsgemäße Durchflussregelvorrichtung beispielhaft angeordnet ist.

Fig. 7a zeigt in Detailansicht A7 von Fig. 7 die an dem Raumsparkanister angeordnete Durchflussregelvorrichtung.

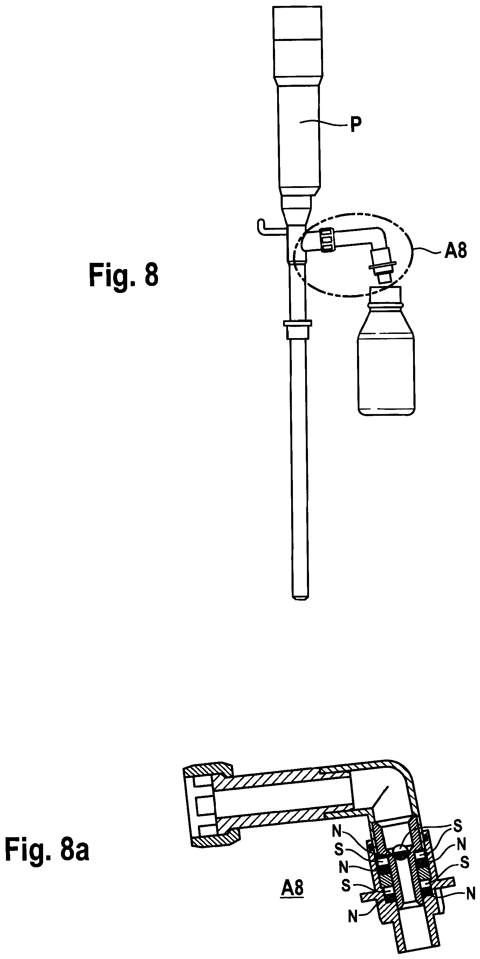

Fig. 8 zeigt eine Pumpe P, an deren Auslauf eine erfindungsgemäße Durchflussregelvorrichtung beispielhaft angeordnet ist.

Fig. 8a zeigt in Detailansicht A8 von Fig. 8 die an der Pumpe angeordnete Durchflussregelvorrichtung.

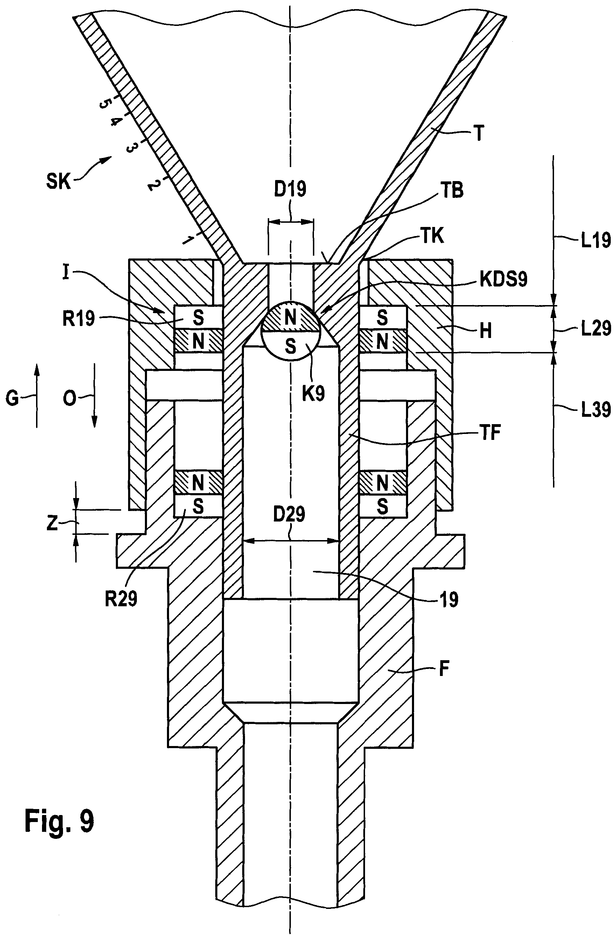

In Fig. 9 ist ein weiteres Ausführungsbeispiel der, an einem Trichter T angeordneten Durchflussregelvorrichtung gezeigt. Der Trichter trägt auf der (in der Zeichnung) linken Seite eine Messskala SK, welche z. B. zur Mengenbestimmung bei Probenahmen dient. Der Trichter geht an seinem Boden TB in einen Durchflusskanal 19 über, welcher einen ersten Längenabschnitt L19, mit einem ersten Durchmesser D19, einen zweiten Längenabschnitt L29, in welchem sich der Durchflusskanal 19 konisch von dem ersten Durchmesser D19 auf einen zweiten Durchmesser D29 erweitert, welcher auch der Durchmesser des dritten Längenabschnitts L39 ist. In einer einen Fuß F umgreifenden und an diesem gemäß den Pfeilen O und G um die Strecke Z längsverschieblich angebrachten Hülse H - sie befindet sich in der in Fig. 9 gezeigten Stellung in Position I - ist wie gezeigt ein erster axial S-N polarisierter Ringmagnet R19 eingelagert. Diesem axial "gegenüber" ist ein im Fuß F, der mit dem Trichter T und dem Trichterfuß TF fest verbunden ist, fest angeordneter N-S polarisierter Ringmagnet R29 zu erkennen, welcher also gegenüber dem ersten Ringmagneten R19 umgekehrt gepolt ist, sodass sich die beiden Ringmagneten R19 und R29 voneinander abstoßen. Die Konfiguration dieses Ausführungsbeispiels entspricht im Prinzip der des Ausführungsbeispiels gemäß Fig. 1. Die Polarisierung der Magnete ist auch hier jeweils mit dem dunkel schraffiert gezeichneten Teil "N" (also Nord) und dem nicht schraffiert gezeichneten Teil "S" (also Süd) angedeutet. Die Hülse stößt mit ihrem oberen Ende an dem Kragen TK des Trichters T an und kann sich somit nicht weiter als gezeigt vom Fuß F entfernen. Am Übergang vom ersten Längenabschnitt L19 zum zweiten Längenabschnitt L29 ruht eine magnetische N-S polarisierte Verschließkugel K9 und verschließt, im Kugeldichtsitz KDS9) sitzend den Durchflusskanal 19.

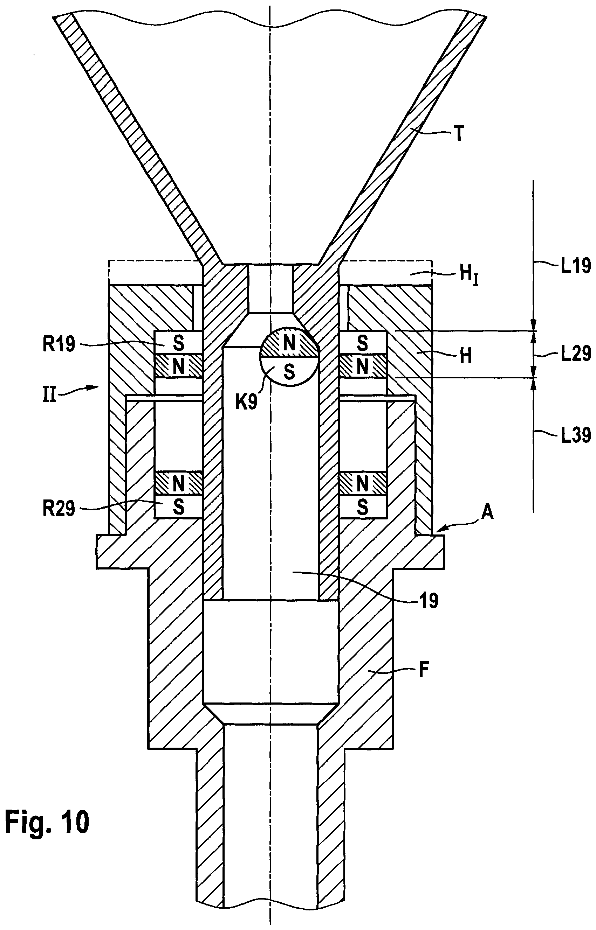

Wird nun z. B. von einer Bedienungsperson die Hülse H entgegen der Magnetkraft des zweiten Ringmagneten R29 in Richtung des Pfeils O etwa um die Strecke Z (Fig. 9) in die in Fig. 10 gezeigte Position II axial verschoben, nimmt der erste Ringmagnet R19 die magnetische Verschließkugel K9 axial in Richtung des Pfeils O mit, wobei die Verschließkugel K9 radial nach außen (in die Position K3 analog zu Fig. 5) strebt und sich an der (in Fig. 9) rechten Innenseite des Durchflusskanals 19 entlangbewegt. Hierbei wird der Durchflusskanal 19 geöffnet. Die Hülse H kommt an der Stelle A zum Anschlag an den Fuß F. Zum Verschließen des Durchflusskanals 19 muss die Bedienungsperson nur die Hülse H loslassen, um den Durchflusskanal 19 infolge der herrschenden Magnetkräfte wieder zu verschließen.

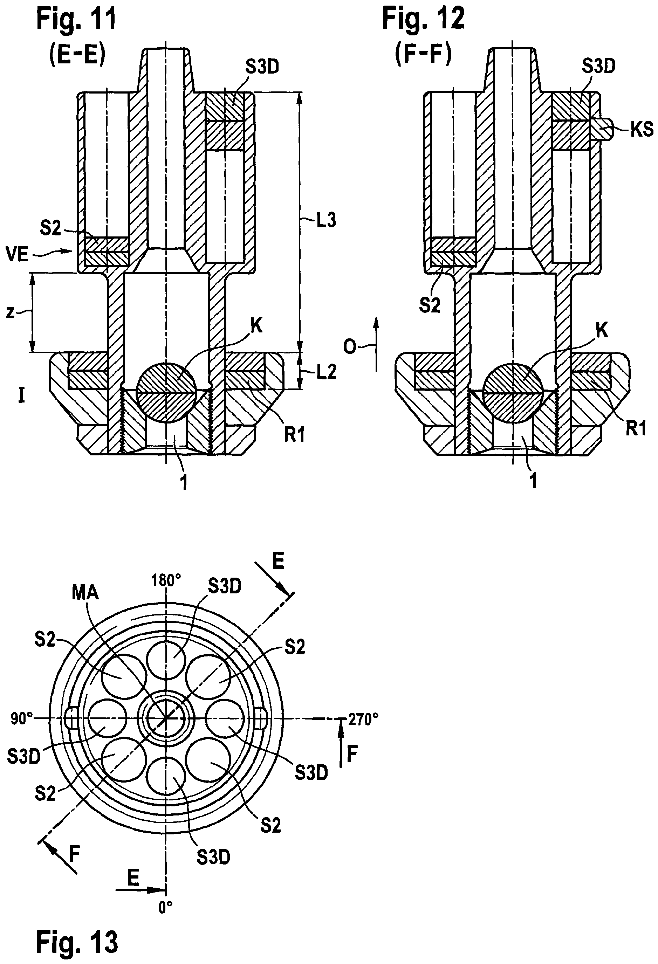

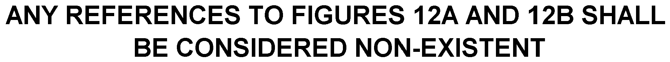

Fig. 11 zeigt stark schematisiert ein weiteres der Darstellung in Fig. 1 ähnliches Ausführungsbeispiel der Durchflussregelvorrichtung - hier mit Stabmagneten S3D - in der Stellung mit durch die Kugel K geschlossenem Durchflusskanal als Schnitt E - E gemäß Fig. 13. Gut zu erkennen ist die Verschiebemöglichkeit des Ringmagneten R1 aus der Position I in Richtung um die Strecke z, um den Durchflusskanal 1 zu öffnen und zu schließen. Näheres hierzu bei der Beschreibung zu Fig. 1.

In Fig. 12 ist die Darstellung von in Fig. 11 als Schnitt F - F gemäß Fig. 13 gezeigt, um die jeweilige Position der Stabmagnete S3D zu erläutern. Die Stabmagnete S3D übernehmen hier die Funktion des zweiten Ringmagneten R2 gemäß Fig. 1.

Fig. 13 zeigt nun eine Draufsicht auf die Durchflussregelvorrichtung sowie die Lage der Schnittlinien E - E und F - F der Fig. 11 und 12. Es sind vier kurze erste Stabmagnete S2 gleicher Polarisierung als Vorspanneinrichtung VE gegen den Ringmagnet R1 alle 90° rings um die Mittelachse MA angeordnet, sodass sie den Ringmagnet R1 abstoßen. In den dazwischenliegenden Lücken erkennt man die vier etwas längeren (Fig. 11) zweiten Stabmagnete S3D, welche ebenfalls alle 90°, aber mit wechselnder Polarisierung angeordnet sind. Die zweiten Stabmagnete S3D sind so weit entfernt von dem Ringmagneten R1 angeordnet, dass sie dessen regelrechte Funktion als Durchflussregelvorrichtung nicht stören. In Fig. 12 ist auf der zylindrischen Außenfläche beispielhaft noch ein radial nach außen ragender Kulissenstift KS zu erkennen. Hierauf wird im Folgenden noch eingegangen werden.

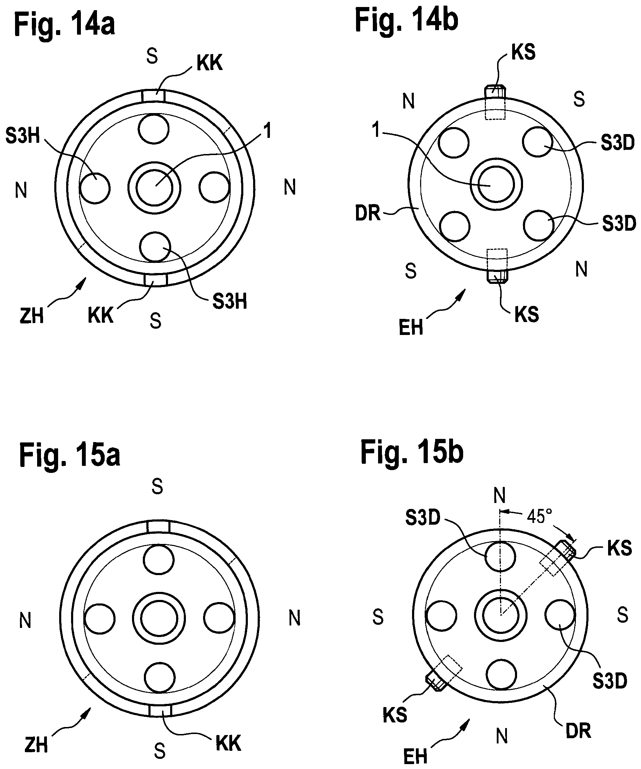

Fig. 14a zeigt eine Draufsicht auf eine in Form einer Hülse ausgebildete zweite Hälfte eines Bajonettverschlusses mit vier dritten Stabmagneten S3H welche mit wechselnder Nord-Süd-Ausrichtung in "Spitzlochposition" angeordnet sind und zwei in Position S angeordnete Kulissenkanäle KK in der Stellung beim Aufsetzen einer als Drehring DR ausgebildeten Durchflussregelvorrichtung (Fig. 14b) auf die Hülse H. Die Nordpole der Magnete sind hier als dunkle Kreise, die Südpole als helle Kreise gezeichnet.

Fig. 14b zeigt eine Draufsicht auf eine in Form eines Drehrings DR ausgebildete erste Hälfte EH eines Bajonettverschlusses BV mit vier dritten Stabmagneten S3D welche mit wechselnder Nord-Süd-Ausrichtung in "Zweilochposition" angeordnet sind, sowie zwischen N und S angeordnete Kulissenstifte KS beim Aufsetzen des Drehrings DR auf die Hülse H. Die Magnetpole N-N und S-S der beiden Hälften sind um 45° gegeneinander verdreht und stoßen sich voneinander ab.

Fig. 15a entspricht der Darstellung von Fig. 14a in der Stellung beim Aufsetzen des Drehrings auf die Hülse.

Fig. 15b entspricht der Darstellung von Fig. 15a, jedoch in verriegelter Stellung nach dem Aufsetzen des Drehrings auf die Hülse. Die Magnetpole N-N liegen jetzt gegenüber den Achsen S-S und ziehen sich zueinander an.

Man muss sich das Zueinander-führen der in den Fig. 14a und 15a gezeigten zweiten Hälften ZH des Bajonettverschlusses zu den in den Fig. 14b und 15b gezeigten ersten Hälften EH des Bajonettverschlusses BV so vorstellen, dass man die Teile in den in der Zeichenebene liegenden Ansichten zueinander und dann ineinander führt, wobei die Kulissenstifte KS in die Kulissenkanäle KK eingeführt werden, danach aufgrund der Kraftwirkung der dritten S3D, S3H Stabmagnete zueinander gezogen und sobald die Kulissenstifte KS die Kulissenbahnen KB erreicht haben in diese per Magnetkraft hineingezogen werden. Ein Lösen des Bajonettverschlusses BV geschieht dadurch, dass man die eben beschriebenen Bewegungsabläufe umgekehrt durchführt.

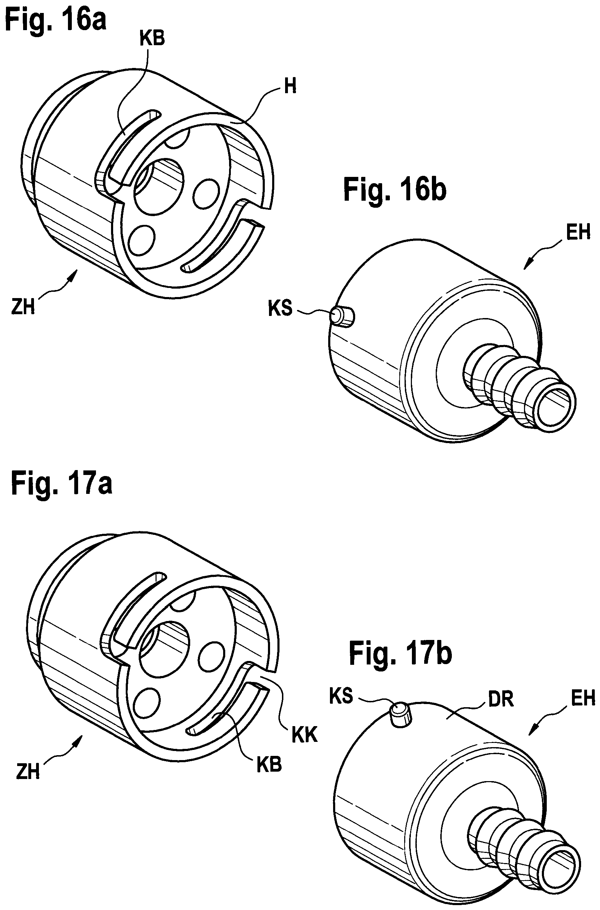

Um die Sache etwas plastischer zu erläutern zeigen die Fig. 16a und Fig. 16b jeweils eine auseinandergezogene isometrische Darstellung der Drehsituationen der in Fig. 14a und 14b gezeigten Elemente beim Aufsetzen des Drehrings DR auf die Hülse H und die Fig. 17a und Fig. 17b zeigen jeweils eine auseinandergezogene isometrische Darstellung der Drehsituationen der in Fig. 15a und 15b gezeigten Elemente in verriegelter Stellung nach dem Aufsetzen des Drehrings DR auf die Hülse H.

In der in den Fig. 16a und Fig. 16b gezeigten Drehstellung der beiden Hälften vor dem Kuppeln ist die Stellung der (in dieser Darstellung bei der ersten Hälfte EH nicht sichtbaren) ersten und zweiten Stabmagnete bei axialer Flucht der Kulissenkanäle KK und der Kulissenstifte KS um 45° zueinander verdreht positioniert, analog zu Fig. 14a und 14b.

In der in den Fig. 16a und Fig. 16b gezeigten Drehstellung der beiden Hälften nach dem Kuppeln der beiden Hälften fluchten die Stabmagnete, analog zu Fig. 12a und 12b.

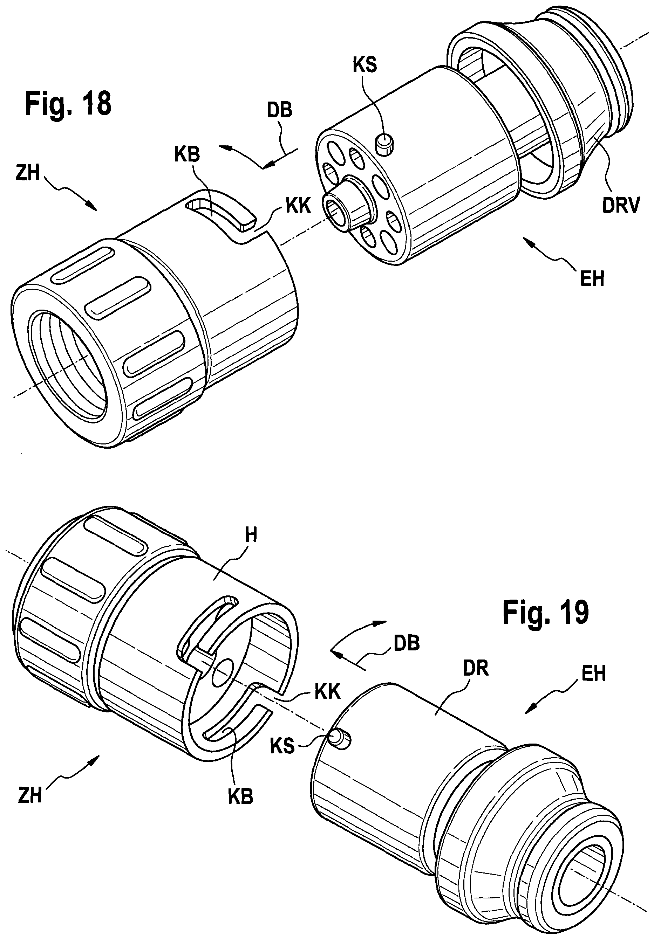

In Fig. 18 sind zwei Hälften EH und ZH eines Bajonettverschlusses BV gezeigt, wobei die erste Hälfte EH auch eine integrierte Durchflussregelvorrichtung DRV aufweist. Die beiden Hälften sind gemäß dem Pfeil DB zunächst axial aufeinander zuzubewegen, wobei der Kulissenstift KS in den Kulissenkanal KK und darauffolgend in einer Drehbewegung die Kulissenbahn KB eingeführt wird.

Fig. 19 zeigt die Situation gemäß Fig. 18 vor der Koppelung in perspektivischer Darstellung gesehen von rechts oben, wobei man auch einen Blick in das Innere der Hülse hat.

## Patentansprüche

1. Durchflussregelvorrichtung, mit
a) einen Durchflusskanal (1) aus nicht-magnetischem Material mit einer Mittelachse (M), mit
aa) einem ersten Längenabschnitt (L1) mit einem ersten Durchmesser (D1),
ab) einem zweiten Längenabschnitt (L2), wobei sich der Durchflusskanal (1) im zweiten Längenabschnitt (L2) konisch von dem ersten Durchmesser (D1) auf einen zweiten Durchmesser (D2) erweitert, und
ac) einem dritten Längenabschnitt (L3),
b) eine im zweiten und dritten Längenabschnitt (L2, L3) beweglich angeordnete magnetische Verschließkugel (K) mit einem Kugeldurchmesser (DK), der zwischen dem ersten und dem zweiten Durchmesser (D1, D2) liegt,
c) einen in der Mittelachse (MA) zentral orientierten, entlang dieser längsverschieblich angeordneten ersten, axial-polarisierten (Nord-Süd-) Ringmagneten (NSRM), mit einem Innendurchmesser (RMDI), welcher größer als der Außendurchmesser des Durchflusskanals (1) im dritten Längenabschnitt (L3) ist,
d) eine den Nord-Süd-polarisierten ersten Ringmagneten (NSRM) axial in Richtung des ersten Längenabschnitts (L1) drängende Vorspanneinrichtung (VE),
wobei die Vorspanneinrichtung (VE) als an der Mittelachse (MA) zentral orientierter zum ersten Ringmagneten (R1) umgekehrt axial-polarisierter, am Durchflusskanal (1) abgestützter zweiter (Süd-Nord-) Ringmagnet (R2) ausgebildet ist, **dadurch gekennzeichnet, dass** die Vorspanneinrichtung (VE) als an der Mittelachse (MA) dritter, zentral orientierter axial-polarisierter (Nord-Süd) am Durchflusskanal abgestützter Ringmagnet (R3) ausgebildet ist, wobei zwischen den beiden sich anziehenden Ringmagneten ein Abstandshalter (AH) angeordnet ist.

2. Durchflussregelvorrichtung nach Anspruch 1, **dadurch gekennzeichnet, dass** der Durchflusskanal (1) im konischen zweiten Längenabschnitt (L2) im Inneren als weicher Kugeldichtsitz (KDS) für die magnetische Verschließkugel (K) ausgebildet ist.

3. Abfülltrichter, **gekennzeichnet durch** eine Durchflussregelvorrichtung nach einem der Ansprüche 1 bis 2.

4. Abfülltrichter nach Anspruch 3, **dadurch gekennzeichnet, dass** er eine den Trichterfüllgrad anzeigende Skale trägt.

5. Abfülltrichter nach Anspruch 3 oder 4, **dadurch gekennzeichnet, dass** er eine Zentriereinrichtung für Behälteranschlüsse aufweist.

6. Ablaufhahn für einen Behälter, **gekennzeichnet durch** eine Durchflussregelvorrichtung nach einem der Ansprüche 1 bis 2.

## Claims

1. Flow control device, **characterized by**
a) a flow channel (1) composed of non-magnetic material having a center axis (MA), with
aa) a first length segment (L1) having a first diameter (D1),
ab) a second length segment (L2), wherein the flow channel (1) expands conically from the first diameter (D1) to a second diameter (D2) in the second length segment (L2), and
ac) a third length segment (L3),
b) a magnetic closing ball (K), which is movably arranged in the second and third length segments (L2, L3) and has a ball diameter (DK) that lies between the first and the second diameters (D1, D2),
c) a first, axially polarized (north-south) ring magnet (NSRM), which is oriented centrally in the center axis (MA) and is arranged so as to be longitudinally movable along the center axis and has an inside diameter (RMDI) that is greater than the outside diameter of the flow channel (1) in the third length segment (L3),
d) a preloading device (VE), which axially urges the north-south-polarized first ring magnet (NSRM) toward the first length segment (L1),
the preloading device (VE) is designed as a reverse-axially-polarized second (south-north) ring magnet (R2), supported on the flow channel (1), which is oriented centrally to the first ring magnet (R1) on the center axis (MA),
**characterized in that**
the preloading device (VE) is designed as an axially-polarized third (north-south) ring magnet (R3), supported on the flow channel, which is oriented centrally on the center axis (MA), wherein a spacer (AH) is arranged between the two mutually attracting ring magnets.

2. Flow control device according to claim 1, **characterized in that** the flow channel (1) in the conical second length segment (L2) is designed inside as a soft ball sealing seat (KDS) for the magnetic closing ball (K).

3. Filling funnel, **characterized by** a flow control device according to one of claims 1 to 2.

4. Filling funnel according to claim 3, **characterized in that** it bears a scale displaying the funnel filling level.

5. Filling funnel according to claim 3 or 4, **characterized in that** it comprises a centering device for container connections.

6. Spigot for a container, **characterized by** a flow control device according to one of claims 1 to 2.

## Revendications

1. Dispositif de régulation de débit, avec
a) un canal de passage (1) composé d'un matériau non magnétique avec un axe médian (M), avec
aa) une première section longitudinale (L1) avec un premier diamètre (D1),
ab) une deuxième section longitudinale (L2), dans lequel le canal de passage (1) s'élargit dans la deuxième section longitudinale (L2) de manière conique du premier diamètre (D1) sur un deuxième diamètre (D2), et
ac) une troisième section longitudinale (L3),
b) une bille de fermeture (K) magnétique disposée de manière mobile dans la deuxième et la troisième section longitudinale (L2, L3), avec un diamètre de bille (DK), qui se situe entre le premier et le deuxième diamètre (D1, D2),
c) un premier aimant annulaire à polarisation axiale (nord-sud) (NSRM) orienté de manière centrale dans l'axe médian (MA), disposé de manière à pouvoir coulisser longitudinalement le long de celui-ci, avec un diamètre intérieur (RMDI), lequel est supérieur au diamètre extérieur du canal de passage (1) dans la troisième section longitudinale (L3),
d) un système de précontrainte (VE) repoussant le premier aimant annulaire à polarisation nord-sud (NSRM) de manière axiale en direction de la première section longitudinale (L1),
dans lequel le système de précontrainte (VE) est réalisé sous la forme d'un deuxième aimant annulaire nord-sud (R2) orienté de manière centrale au niveau de l'axe médian (MA), à polarisation axiale inversée par rapport au premier aimant annulaire (R1), soutenu au niveau du canal de passage (1),
**caractérisé en ce que**
le système de précontrainte (VE) est réalisé sous la forme d'un troisième aimant annulaire (R3) orienté de manière centrale au niveau de l'axe médian (MA), à polarisation axiale (nord-sud), soutenu au niveau du canal de passage, dans lequel un écarteur (AH) est disposé entre les deux aimants annulaires s'attirant.

2. Dispositif de régulation de débit selon la revendication 1, **caractérisé en ce que** le canal de passage (1) est réalisé dans la deuxième section longitudinale (L2) conique dans l'intérieur sous la forme d'un siège étanche de bille (KDS) souple pour la bille de fermeture (K) magnétique.

3. Trémie de remplissage, **caractérisée par** un dispositif de régulation de débit selon l'une quelconque des revendications 1 à 2.

4. Trémie de remplissage selon la revendication 3, **caractérisée en ce qu'**elle porte une graduation indiquant le degré de remplissage de trémie.

5. Trémie de remplissage selon la revendication 3 ou 4, **caractérisée en ce qu'**elle présente un système de centrage pour des raccords de contenant.

6. Robinet de vidange pour un contenant, **caractérisé par** un dispositif de régulation de débit selon l'une quelconque des revendications 1 à 2.
